Europäisches Patentamt

European Patent Office

Office européen des brevets

(11) Veröffentlichungsnummer: **0 252 235 B1**

## EUROPÄISCHE PATENTSCHRIFT

(45) Veröffentlichungstag der Patentschrift: **08.07.92**

(51) Int. Cl.⁵: **G01N 22/00**

(21) Anmeldenummer: **87106363.2**

(22) Anmeldetag: **30.04.87**

(54) Verfahren und Vorrichtung zur Analyse mittels Mikrowellen.

(30) Priorität: **09.07.86 DE 3622957**

(43) Veröffentlichungstag der Anmeldung:
**13.01.88 Patentblatt 88/02**

(45) Bekanntmachung des Hinweises auf die
Patenterteilung:
**08.07.92 Patentblatt 92/28**

(84) Benannte Vertragsstaaten:
**AT BE CH FR GB LI NL SE**

(56) Entgegenhaltungen:

**REV. SCI. INSTRUM., Band 46, Nr. 6, Juni
1975, Seiten 716-718, The American Institute
of Physics, New York, US; G.E. REESOR et al.:
"X-band spectrometer with a rectangular resonant stark cell"**

**REV. SCI. INSTRUM., Band 49, Nr. 4, April
1978, Seiten 526-530, The American Institute
of Physics, New York, US; J. LEGRAND et al.:
"Microwave spectrometer for saturated absorption experiments"**

(73) Patentinhaber: **KERNFORSCHUNGSZENTRUM
KARLSRUHE GMBH
Weberstrasse 5 Postfach 3640
W-7500 Karlsruhe 1(DE)**

(72) Erfinder: **Berger, Lutz
Theodor-Körner-Strasse 34
W-7514 Eggenstein(DE)**
Erfinder: **Breton, Heimo, Dr.
Rheinstrasse 15c
W-7514 Eggenstein-Leopoldshafen 2(DE)**
Erfinder: **Krieg, Gunther, Prof. Dr.
Im Rennich 12
W-7500 Karlsruhe(DE)**
Erfinder: **Schmitt, Gerhard
Sanddornweg 3
W-7500 Karlsruhe(DE)**
Erfinder: **Giraud, Helmut
Falkenweg 3
W-7513 Stutensee(DE)**

## Beschreibung

Die Erfindung betrifft ein Verfahren zur Analyse insbesondere gasförmiger Medien mittels Mikrowellenabsorption, wobei eine Mikrowelle mit mindestens einer Frequenz erzeugt wird sowie eine Vorrichtung zur Analyse gasförmiger Medien mittels der Absorption von Mikrowellen, insbesondere unter Einsatz des Stark-Effekts, vor allem zur Durchführung eines Verfahrens nach einem der vorangehenden Ansprüche, mit mindestens einem Mikrowellensender, mindestens einer Meßzelle, mindestens einem Detektor, Verstärkungs- und Anzeigeeinrichtungen für das Meßsignal, eine Regeleinrichtung für den Mikrowellensender sowie einen Stark-Generator.

Die Analyse gasförmiger Medien, gegebenenfalls nach Überführung auch eines Feststoffes oder einer Flüssigkeit in den gasförmigen Zustand durch Absorption von Mikrowellen in bestimmten charakteristischen Frequenzbereichen durch Anregung von Rotationsübergängen in Molekülen der zu untersuchenden Medien ist bekannt. Zur Reduzierung der Linienbreite, erfolgt die Untersuchung im Niederdruckbereich. Die Absorptionslinien werden mittels des Starkeffekts aufgespalten, wobei vorzugsweise eine Starkwechselspannung angelegt wird, um die Nachweisempfindlichkeit zu erhöhen. Ein derartiges Verfahren ist grundsätzlich hochselektiv und erfordert keine vorherigen Veränderungen, wie Ionisation oder chemischen Reaktionen an den zu untersuchenden Stoffen.

Solche verfahren werden in Rev. Sci. Instrum. beschrieben, und zwar in Band 46, Nr. 6, Juni 1975, seiten 716-718 und in Band 49, Nr. 4, April 1978, seiten 526-530, The American Institute of Physics, New York, US.

Das Untersuchungsverfahren konnte bisher praktisch nur im Labormaßstab eingesetzt werden. Industriell einsetzbare Vorrichtungen standen nicht zur Verfügung, da bekannte Vorrichtungen sowohl durch konstruktive, mechanische als auch elektrische Ausgestaltung aufwendig waren, zum Teil empfindliche Komponenten aufwiesen und die Einhaltung kritischer Parameter problematisch oder aufwendig war.

So ist beispielsweise eine Stabilisierung und damit eine Regelung (im eigentlichen Sinne) der Frequenz der ausgesendeten Mikrowelle auf das zu untersuchende Absorptionsmaximum des interessierenden Moleküls, gegebenenfalls unter Berücksichtigung der einwirkenden Starkspannung, erforderlich. Hierzu wurde vorgeschlagen, einen Teil der Hochfrequenz der Mikrowellenstrahlung mit Hilfe eines Richtkopplers einer Mischdiode zugeführt, dort mit der Oberwelle eines stabilen Senders niedrigerer Frequenz, die beispielsweise durch einen Quarz erzeugt wurde, zu vergleichen, durch Synchronisation mit einer PLL-Schaltung die Mikrowellenfrequenz an die Oberwelle der niederen Frequenz anzubinden und derart eine Stabilisierung der Hochfrequenz der Mikrowelle auf die Absorptionslinie der zu messenden Komponente zu bewirken.Weiterhin wurde vorgeschlagen, die Frequenz des Mikrowellensenders zusätzlich zu modulieren, einen Teil der Mikrowellenstrahlung durch eine Referenzzelle mit der zu messenden Komponente zu senden, wobei zur Aufspaltung der Mikrowellenstrahlen wiederum ein Richtkoppler eingesetzt werden muß. Mit Hilfe des Ableitungssignals am zusätzlich zum Detektor der Meßzelle erforderlichen Detektor der Referenzzelle wird der Mikrowellensender auf die Absorptionslinie der zu messenden Komponente fixiert.

Der Nachteil einer solchen Sendermodulation besteht in dem sicher auftretenden Ansteigen der Rauschleistung am Detektor. Die bisherigen Verfahren und Vorrichtungen waren, insbesondere durch die aufwendige Frequenzstabilisierung zu teuer, so daß konkurrierende Meßverfahren und Vorrichtungen preiswerter waren. Insgesamt waren die bekannten Verfahren und Vorrichtungen insbesondere für die Prozeß-Meßtechnik ungeeignet.

Der Erfindung liegt daher die Aufgabe zugrunde, ein gattungsgemäßes Verfahren zu schaffen, das unter Vermeidung der genannten Nachteile eine preiswerte Regelung des Mikrowellensenders ermöglicht und insbesondere die Voraussetzungen für einen industriell einsetzbaren Mikrowellen-Prozeß-Analysator schafft.

Erfindungsgemäß wird die genannte Aufgabe durch ein Verfahren der eingangs genannten Art gelöst, welches sich dadurch auszeichnet, daß zur Regelung der Mikrowellenfrequenz eine Stark-Spannung bei abgestimmter Mikrowellenfrequenz derart gewählt wird, daß der durch Paritätswechsel zwischen unverschobener Absorptionslinie und Starklinien bedingte Nulldurchgang eines unter Einfluß dieser Spannung erzeugten, über die Frequenz hin angefragten Referenzsignals mit der gesuchten Absorptionsfrequenz der Komponente des gasförmigen Mediums übereinstimmt und die erzeugte Mikrowellenfrequenz durch auftretende Abweichungen des Referenzsignals vom Nullwert geregelt wird. Vorzugsweise arbeitet das Verfahren mit einer einzigen Frequenz. Eine erfindungsgemäße Vorrichtung ist derart ausgestaltet, daß zumindestens eine Referenzzelle vorgesehen ist, die mit einem derart abgestimmten Stark-Spannungssignal beaufschlagt wid, daß die Frequenz des durch Polaritätsänderung zwischen unverschobener Absorptionslinie und Starklinien bedingten Nulldurchgangs des Referenzzellensignals mit der Frequenz maximaler Absorption der zu untersuchenden Komponente des gasförmigen Mediums in der Meßzelle übereinstimmt und daß die Regeleinrichtung die Frequenz des Mikrowellensenders mittels Abweichungen des Referenzsignals vom Nulldurchgang regelt.

Die Frequenzregelung oder -stabilisierung erfolgt also durch eine Referenzzelle mit einer kleineren, abgestimmten Starkspannung, ohne daß der Hochfrequenzsender frequenzmoduliert werden muß. Dies führt zu einem besseren Signal-Rauschverhältnis. Es kann auf ein Frequenznormal und eine Mischerdiode verzichtet werden, wodurch das gesamte Verfahren einfacher und weniger aufwendiger wird.

Es ist insbesondere vorgesehen, daß eine erste und eine zweite Starkwechselspannung phasenverschoben erzeugt werden, wobei vorzugsweise die Stark-Modulation in Meß- und Referenzzelle mit einer Phasenverschiebung von 90 Grad erfolgt. Hierdurch ist es möglich, nur einen Detektor, sowohl für das Referenz- als auch für das Meßsigal einzusetzen,und weiterhin vorzusehen, daß eine gemeinsame, wenn auch phasenversetzte Detektion und Vorverstärkung von Referenz- und Meßsignalen erfolgt, wobei insbesondere die Vorverstärkung durch ein unterkritisch gedämpftes schmalbandiges passives Netzwerk erfolgt. Weiterhin ermöglicht die Phasenverschiebung zwischen den Starkspannungen für die Referenzzelle und die Meßzelle, daß mindestens eine Referenz- und Meßzelle hintereinander angeordnet sind, daß für beide Zellen ein gemeinsamer Detektor vorgesehen ist und daß ein Phasenschieber zur Erzeugung einer Phasendifferenz der Spannung für Meßzelle und Referenzzelle vorgesehen ist, so daß bei einer derartigen Ausgestaltung auf Richtkoppler und Harmonie-Mischer verzichtet werden kann.

Insgesamt ergeben sich durch die erfindungsgemäße Ausgestaltung verfahrensmäßige und konstruktive Vorteile durch eine höhere Empfindlichkeit, den Verzicht auf hochstabile Niederfrequenzsender und einer einfachen Regelung, wobei weiterhin ein zusätzliches Rauschen durch die Frequenzmodulation, wie es bei dem einen vorbekannten Verfahren gegeben ist, vermieden wird. Das erfindungsgemäße Verfahren garantiert äußerst schnelle Ansprechzeiten.

Vorzugsweise ist vorgesehen, daß im Leistungs-Sättigungsbereich gearbeitet wird, wobei durch eine Lock-in-Verstärkung eine phasen- und frequenzselektive Verstärkung erfolgt.Hierdurch wird bei phasenoptimierter Einstellung der Mittelwert der gleichgerichteten Signalspannung als Meßsignal ausgegeben. Insbesondere bei Beschränkung auf eine Meßfrequenz kann ein kompakter und preisgünstiger elektronischer Aufbau bei Verwendung gängiger Bauteile erreicht werden. Es ergibt sich ein Maximum an Bedienerfreundlichkeit, wobei insbesondere ein Rechner direkt angesteuert werden kann.

Wenn mehrere Absorptionsfrequenzen untersucht werden sollen, so kann vorgesehen sein, daß mehrere Mikrowellensender unterschiedlicher Frequenz einer Meßzelle zugeordnet sind, wobei, um ein Auswechseln des Reingaserzeugers, beispielsweise ein Permeationssystem in der Referenzzelle zu vermeiden, in Weiterbildung vorgesehen sein kann, daß mehrere Referenzzellen einer Meßzelle zugeordnet sind, wobei entweder die Referenzzellen einander parallel geschaltet sind oder aber die Referenzzellen in Reihe geschaltet sind. Bei derartigen Mehrkomponentensystemen, müssen die Mikrowellensender, die vorzugsweise Gunn-Oszillatoren aufweisen, über entsprechende Hohlleiterschalter entweder direkt auf die erste Referenzzelle oder nach parallel geordneten Referenzzellen auf die gemeinsame Meßzelle geschaltet werden. Wesentlich ist, daß ansonsten die gesamte Anordnung, insbesondere auch die Auswerteelektronik vor allem mit einem Detektor und einem Vorverstärker gleich bleibt und lediglich mit den Sendern auch die Stark-Spannungen inden Meß- bzw. Referenzzellen umgeschaltet werden müssen. Die Messungen der verschiedenen Komponenten erfolgt durch Ansteuern des jeweiligen Senders und Anlegen der jeweiligen Stark-Spannungen, wodurch allerdings Umschaltzeiten bedingt sind. Insbesondere bei Messungen von zwei Komponenten werden daher bevorzugt zwei Sender vorgesehen die über Schalter der Meßzelle zugeschaltet werden können und die Referenzzellen in Reihe, gemeinsam aber parallel zur Meßzelle angeordnet sind, wobeidie Referenzzellen mit phasenverschobenen Stark-Spannungen beaufschlagt werden. Im Gegensatz zur vorgenannten Lösung ist eine permanente Frequenzlockung möglich, was die Zeitverzögerung durch jeweils erneute Frequenzsynchronisation vermeidet.

Da sich herausgestellt hat, daß der obengenannte Null-Durchgang des Mikrowellenabsorptionssignals druckabhängig ist, ist insbesondere für die Referenzmessung eine Druckregelung vorgesehen. Ein erfindungsgemäßes Verfahren zur Druckregelung zeichnet sich dadurch aus, daß der Druck gemessen und mittels des Drucksignals die Temperatur eines Permeationssystems für die Reingaskomponente geregelt wird. Das erfindungsgemäße System ist insbesondere vorteilhaft, weil bei dem beiderseitigen Unterdruck eine konventionelle Druckregelung über elektrische Regelventile oder dergleichen nicht möglich ist. Das erfindungsgemäße Druckregelungsverfahren ist einfach, da die Druckregelung über eine definierte Verdampfung der zu messenden Reinkomponente erfolgt. Fällt der Druck aufgrund von Schwankungen beim Absaugen, wie durch eine Pumpe ab, so wird durch eine stärkere Heizung der Reinkomponente eine stärkere Verdampfung derselben und damit eine Druckerhöhung bewirkt; bei Druckanstieg wird entweder die Temperatur erniedrigt oder aber eine Kühlung durchgeführt, so daß die Verdampfung reduziert wird und insgesamt der Druck in der Zelle erniedrigt wird. Das Gas wird vorzugsweise aus der Zelle mit konstantem Durchfluß abgesaugt. Bei konstant arbeitender Absaugpumpe, wird ein konstanter Durchfluß dadurch erreicht, daß im Absaugweg eine Kapillare angeordnet ist. Weiterhin kann vorgesehen sein, daß dem Ausgang und der Referenzzelle Filter nachgeordnet sind. Das Filter absorbiert die zu messende Komponente und verhindert bei einem Vakuumsystem derart, daß die Reinkomponente in die Meßzelle gelangt und dort das Meßergebnis verfälschen könnte.

Eine bevorzugte Ausführungsform sieht vor, daß Referenz- und Meßzellen eine gemeinsame Thermostatisierung aufweisen. Hierdurch entfällt eine thermische Isolation zwischen Referenz- und Meßzelle.

Zur Druckregelung in der Meßzelle werden mechanische oder elektrische Ventile eingesetzt, die insbesondere als Kreuzventile derart ausgestaltet sind, daß das der Meßzelle zugeführte Gas im Nebenstrom von an einer Zuleitungsöffnung zur Meßzelle vorbei strömenden Gas abgezweigt wird. Hierdurch werden Totvolumina, die einen sogenannten Memory-Effekt bedingen können, weitgehend reduziert. Mit Memory-Effekt wird verstanden, daß die Meßvorrichtung auch noch später ein Signal für ein einmal früher gemessenes Gas abgibt.

Weitere Vorteile und Merkmale der Erfindung ergeben sich aus den Ansprüchen und aus der nachfolgenden Beschreibung, in der wesentliche Merkmale der Erfindung unter Bezugnahme auf die Zeichnungen im einzelnen erläutert sind. Dabei zeigt:

Fig. 1      eine prinzipielle Darstellung des Gesamtaufbaus der erfindungsgemäßen Vorrichtung;

Fig. 2      die Ventilanordnung zur Zuführung des Meßgases zur Meßzelle;

Fig. 3      eine Darstellung zur Erläuterung der Druck- und Temperaturregelung;

Fig. 4      ein schematischer Blockschaltplan des Gesamtsystems;

Fig. 5      ein Diagramm zur Erläuterung der Regelung der Mikrowellenfrequenz;

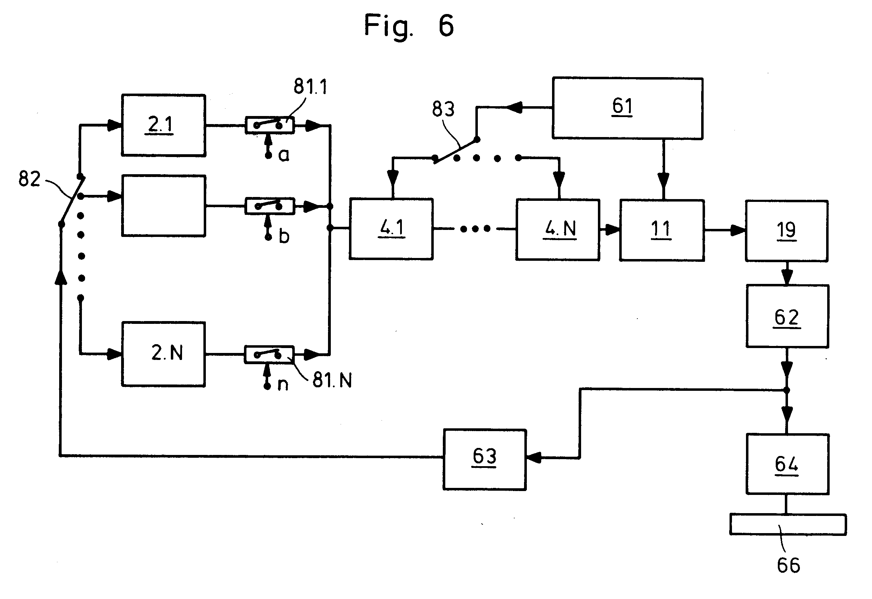

Fig. 6      ein Blockschaltbild eines bevorzugten Mehrkomponentensystems; und

Fig. 7      ein Blockschaltbild eines andersartigen Zweikomponentensystems

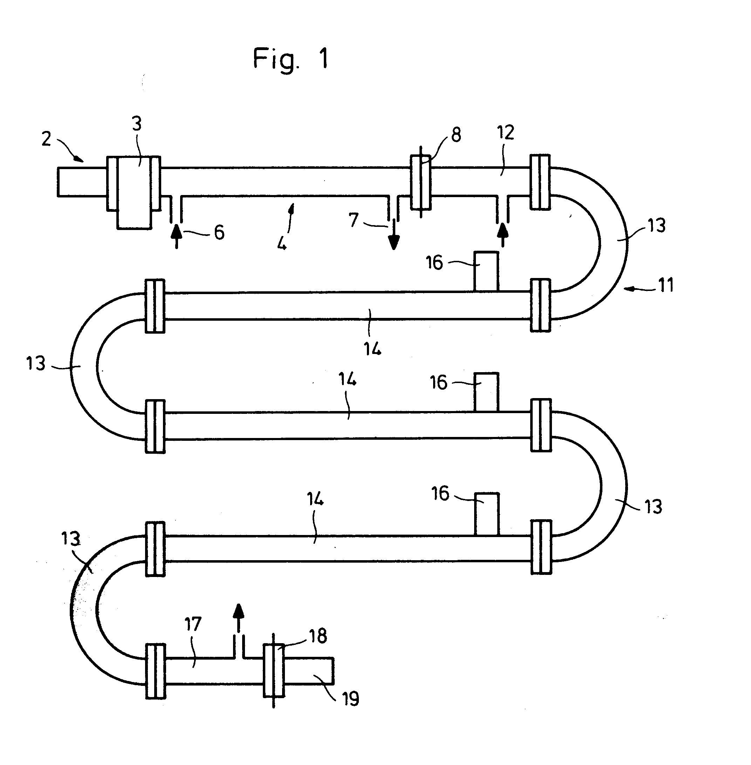

Figur 1 zeigt den prinzipiellen mechanischen Aufbau der erfindungsgemäßen Vorrichtung oder des erfindungsgemäßen Mikrowellen-Prozeß-Analysators 1. Er weist einen Mikrowellensender 2, einen hinter diesem angeordneten Isolator 3, eine darauf folgende Referenzzelle 4 mit Einlaß 6 und Auslaß 7 für das Referenzgas auf. An die Referenzzelle 4 schließt sich ein isolierendes Fenster 8 an. Dem folgt die Meßzelle 11, die zunächst eine Gaseinlaß 12 aufweist. Die Meßzelle 11 ist zur Vermeidung großer Baulängen mäanderförmig geführt und in jeweils mehrere 180 Grad-Bögen 13 und gerade Stark-Kammern 14 unterteilt. Die Stark-Kammern 14 weisen in herkömmlicher Weise isolierte Stark-Spannungs-Zuführungen 16 auf.

Schließlich schließt sich an einen Gasauslaß 17 der Meßzelle 11 über ein weiteres isolierendes Fenster 18 ein Detektor 19 an.

Der Querschnitt der Meßzelle 11 und insbesondere der Stark-Kammern 14 ist auf den jeweiligen Mikrowellenbereich, in dem die Vorrichtung arbeiten soll, optimiert und insbesondere, wenn nur eine Frequenz analysiert werden soll, hierauf abgestimmt. Der Querschnitt beträgt vorzugsweise 7,1 mm x 3,6 mm, ist also nicht überdimensioniert.

Der Mikrowellensender weist vorzugsweise einen Gunn-Oszillator auf. Wenn mehrere Gaskomponenten analysiert werden sollen, so können mehrere Sender über jeweils entsprechende Hohlleiterschalter auf gemeinsame Meß-/Referenzzellen geschaltet werden, wobei gegebenenfalls eine Referenzzelle solche zu untersuchende Komponenten enthält. Die Stark-Spannungen in der Meß- bzw. Referenzzelle werden entsprechend den Sendern zugeschaltet. Es kann bei einem Mehrkomponenten-System auch vorgesehen sein, daß, wenn die jeweilige Komponente für die Referenzzelle rein bereit gestellt wird, mehrere Referenzzellen hinter dem ihnen jeweils zuzuordnenden Sender zueinander parallel oder aber sämtlich in Reihe geschaltet sind und entsprechend der jeweils vorzunehmenden Messung zugeschaltet werden.

Durch die Stark-Kammer 14 und ein in ihr isoliert gehaltenes Septum wird die erforderliche Stark-Kapazität gebildet. Die Stark-Spannungszuführung 16 ist derart ausgebildet, daß sie eine die Kapazität der inneren Stark-Elektrode zu einem Parallelschwingkreis erweiternden externen Induktivität aufweist, die wiederum gleichzeitig die Hochspannungswicklung eines Transformators ist.

Gleichzeitig wird durch die Serienschaltung einer Kapazität, die sehr viel größer ist als die Kapazität der Starkzelle, in dem Schwingkreis und durch Einbau einer Diode mit Vorwiderstand parallel zur Starkkapazität eine Anhebung der Starkwechselspannung derart erreicht, daß der negative Scheitelwert der Wechselspannung auf 0 Volt aufsitzt.

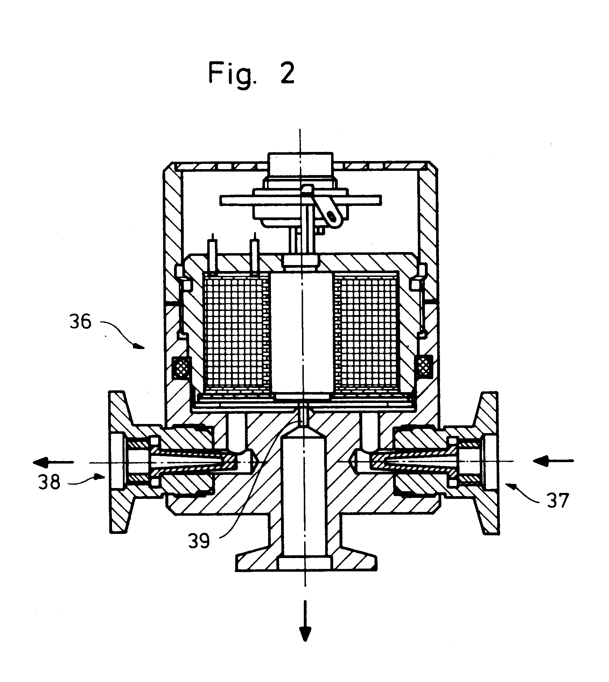

Die Zuführungsleitung 33 ist weiterhin mit einen sogenannten Kreuzventil 36 verbunden, wie es in der Figur 2 dargestellt ist. Das der jeweiligen Meßkammer 14 zuzuführende Gas wird im Ventil von einem von dessen Einlaß 37 zu dessen Auslaß 38 bei geöffnetem Ventil über einen Nebenzweig 39 abgezweigt. Hierdurch werden Totvolumina reduziert, die zu hohen Ansprechzeiten führen.

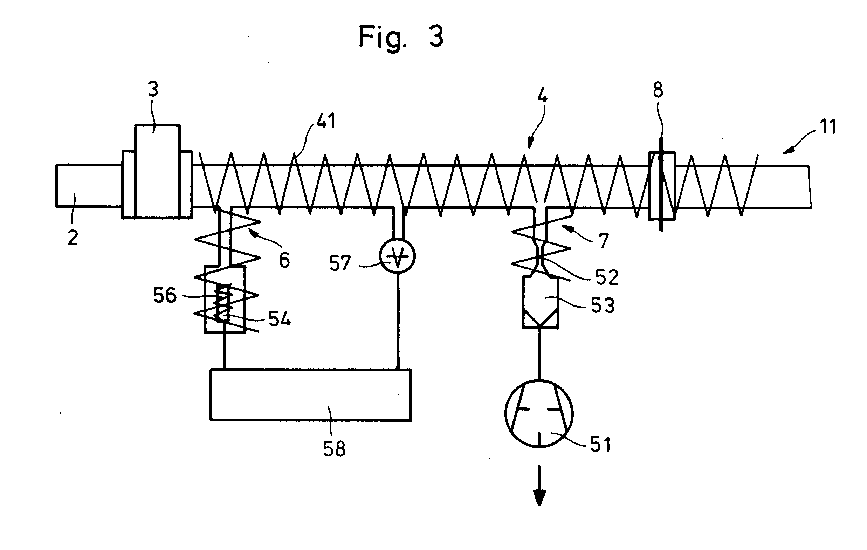

Aus der Figur 3 ist ersichtlich, daß die Referenzzelle 4 und die Meßzelle 11 durch eine gemeinsame Thermostatisierung 41 auf der gleichen gemeinsamen Temperatur gehalten werden. Hierdurch entfällt eine thermische Isolation zwischen beiden Systemen.

Insbesondere in der Referenzzelle ist ein konstanter Druck aufrecht zu erhalten. Hierzu reicht die bei der Meßzelle 11 vorgenommene Druckregelung einer Nachführung bei einem Regelventil bei Schwankungen der Pumpleistung des Vakuumsystems nicht aus.

Zunächst ist an den Auslaß 7 der Referenzzelle 4 eine herkömmliche Vakuumpumpe 51 angeschlossen. Der Auslaß 7 weist eine Kapillare 52 auf, durch die ein konstanter Gasdurchfluß erreicht wird. Wenn nur ein Vakuumsystem verwendet wird, so ist der Kapillare ein Filter 53 nachgeschaltet, daß die zu messende Komponente absorbiert und somit verhindert, daß diese als Reinsubstanz in die Meßzelle gelangt, wo sie die Messung verfälschen würde.

Die für die Meßzelle 4 erforderliche Reinsubstanz wird durch ein diese enthaltenes Permeationsgefäß 54 bereit gestellt, das eine separate Heizung und/oder Kühlung 56 aufweist. Diese wird durch eine mit einem Druckaufnehmer 57 verbundene Druckregelung 58 in der folgenden Weise gesteuert: Wenn die Saugleistung des Vakuumsystems variiert, können trotz der Kapillare 52 Druckschwankungen auftreten. Diese werden über den Druckaufnehmer 57 gemessen, der über die Druckregelung 58 das Permeationsgefäß 54 entweder heizt - wenn der Druck abfällt, um eine verstärkte Permeation der Reinkomponente zu erreichen - oder aber die Heizung reduziert bzw. kühlt - wenn der Druck ansteigt, um so die Permeationsleistung zu verringern. Hierdurch wird eine genaue und zuverlässige Druckregelung erreicht.

Eine relative gute Druckkonstanz ist insbesondere zur Regelung der Mikrowellenfrequenz und damit zu deren Stabilisierung erforderlich.

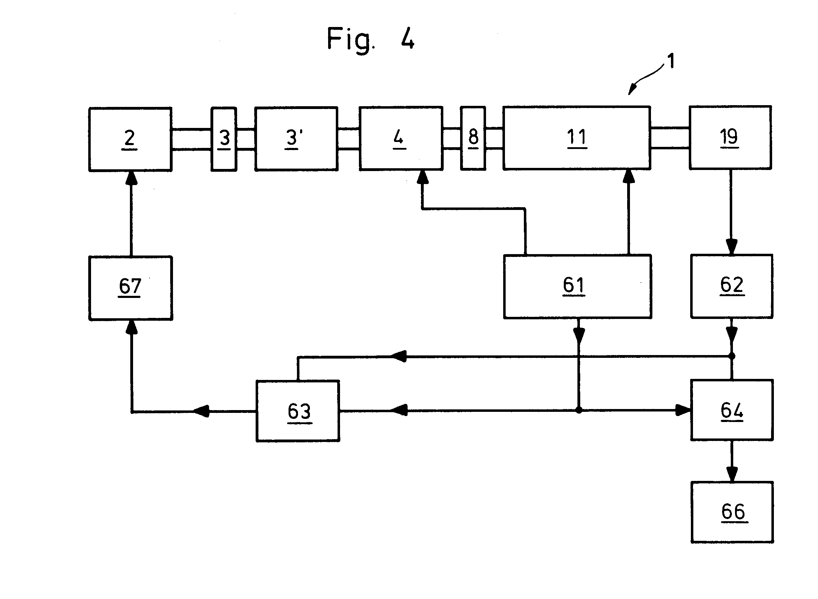

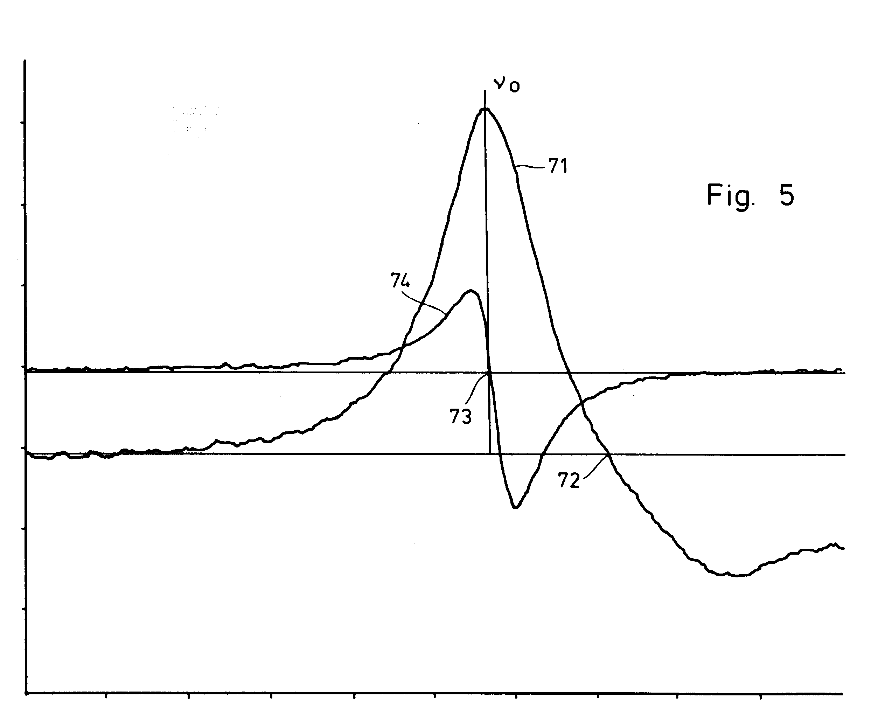

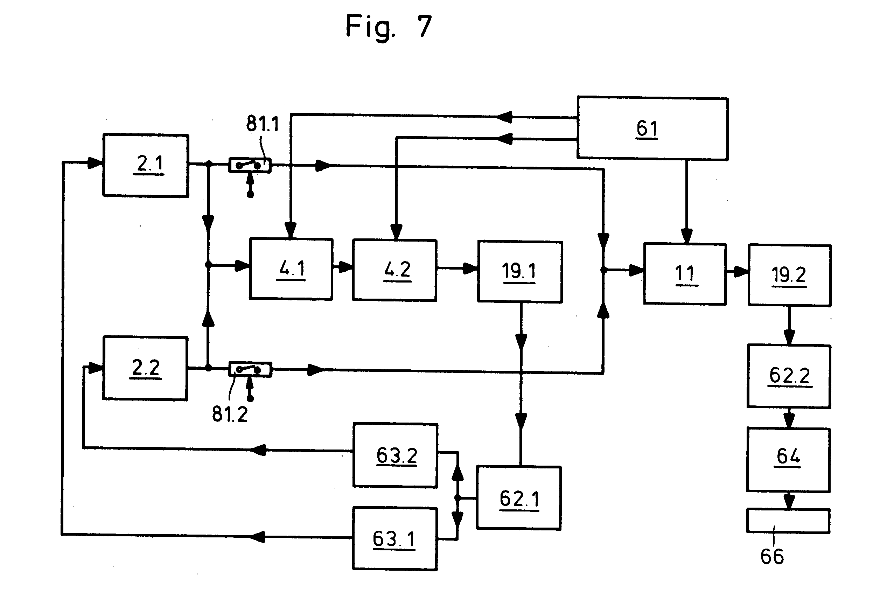

Diese wird im folgenden anhand der Figuren 4 und 5 erläutert. Hierzu zeigt die Figur 4 zunächst in einem Blockschaltbild die gesamte erfindungsgemäße Vorrichtung einschließlich ihrer elektronischen Komponenten. Dabei sind gleiche Teile mit gleichen Bezugszeichen wie in der Figur 1 bezeichnet. Dem Isolator 3 ist noch ein Abschwächer 3′ nachgeordnet. Weiterhin zeigt die Figur 7 den Stark-Generator 61 zur Erzeugung der Stark-Spannungen in Referenz- und Meßzelle 4, 11.

Dem Detektor 19 ist ein Vorverstärker 62 nachgeordnet, dessen Ausgang einerseits zur Regeleinheit 63 für den Mikrowellensender 2 und andererseits über einen Lock-in-Verstärker 64 zur Anzeige 66 für das Meßsignal geführt ist. Dem Mikrowellensender 2 ist ein Bandfilter 67 vorgeschaltet.

Die Regelung und damit Stabilisierung der Frequenz des Mikrowellensenders bzw. dessen Gunn-Oszillators erfolgt in der folgenden Weise: Vom Stark-Oszillator 61 wird eine gegenüber der der Meßzelle 11 zugeleiteten frequenzmodulierten Stark-Spannung phasenverschobene weitere Stark-Spannung, die vorzugsweise um 90 Grad phasenverschoben ist, abgeleitet und der Referenzzelle 4 zugeleitet.

In der Figur 5 ist die Intensität zunächst über die Frequenz bei ausmoduliertem Rotationsübergang mittels Stark-Spannung dargestellt. Aus der Abbildung ist ersichtlich, daß ein Nulldurchgang bei 72 gegeben ist, der sich durch Vermessung des eigentlichen Signals und der Stark-Komponenten mit einer Phasendifferenz von 180 Grad ergibt. Dieser Nulldurchgang des gemessenen Absorptionssignals wird in der Referenzzelle im Hinblick auf die Regelung bzw. Stabilisierung ausgenutzt. Die Referenzzelle 4 wird mit einer Stark-Spannung beaufschlagt, die derart gewählt wird, daß gerade der Nulldurchgang 73 des Referenzsignals 74 (Meßsignal 71 und Referenzsignal 74 sind in der Figur 5 zur besseren Unterscheidung vertikal verschoben dargestellt), gerade mit der unverschobenen Absorptionsfrequenz Vo des Meßsignals übereinstimmt. Der Nulldurchgang 73 wird gewählt, weil seine Lage aufgrund der Steilheit des Referenzsignals 74 in seinem Bereich besser festgestellt werden kann als das Maximum des Signals 74. Nach dieser Eichung ergibt sich bei der eigentlichen Messung der Nulldurchgang durch Paritätswechsel bei der Verarbeitung des gemessenen Referenzsignals.

Im konkreten Ausführungsbeispiel der Figur 5 handelt es sich um Diagramme für Formaldehyd mit einer Absorptionsfrequenz des Meßsignals 71 bei Vo = 28,97 GHZ aufgrund einer Stark-Feldstärke in der Meßzelle von E = 800 V/cm, wobei sich der Nulldurchgang des Referenzsignals 74 mit dem Maximum des Meßsignals 71 bei einer Feldstärke E = 160 V/cm einstellt. Der Druck betrug 0,03 mbar und die Messung erfolgte bei Zimmertemperatur.

Erfolgen nun nach der vorstehend beschriebenen Abstimmung bei Durchführung der eigentlichen Messungen Schwankungen der Mikrowellenfrequenz gegenüber der Absorptionsfrequenz Vo , so hat dies zur Folge, daß der Detektor 19 nicht mehr den Nulldurchgang 73 des Referenzsignals 74 mißt, sondern mit einer endlichen positiven oder negativen Spannung des Referenzsignals beaufschlagt wird, die dann zur Regelung des Mikrowellensenders 2 verwendet wird.

Die Referenzschaltung weist ebenso wie der Meßzweig einen ansich bekannten frequenzselektiven, sogenannten Lock-in-Verstärker auf. Dieser bewirkt praktisch eine getastete Gleichrichtung mit Polaritätsumkehr, wobei das Steuersignal vom Oszillator für die Starkwechselspannung abgeleitet sein kann.

Der Verstärker ist phasenselektiv. Um 90 Grad zueinander verschobene Meß- und Referenzsignale können durch geeignete Phasenlage der Tastzeitpunkte in Meß- und Referenzzweig der Schaltung getrennt werden. Dies geschieht dadurch, daß an dem vom Detektor aufgenommenen Signal, das Referenz- und Meßkomponenten enthält, in jedem Zweig nur die mit der Steuerspannung in Phase befindliche In-Phase-Komponente gleichgerichtet wird, während die um 90 Grad verschobene Komponente sich heraus hebt.

Phasenverschiebungen der in den Lock-in-Verstärker gelangenden Meß- und Referenzsignale aus dem Detektor gegenüber den Starkwechselspannungen durch elektronische Bauteile können durch einen digitalen Phasenschieber berücksichtigt werden. Hierzu wird ein Oszillatorsignal, von dem beispielsweise die Frequenz der Stark-Spannung durch Teilung abgeleitet wurde, einem Zähler zugeführt, der durch ein Set-Signal, beispielsweise das der Starkwechselspannung zugrundeliegende, jeweils auf seinen vorgewählten binären Wert gesetzt wird. Jeweils um eine dem binären Wert entsprechende Zeit nach dem Setzen erfolgen Ausgangsimpulse, die in bekannter Weise in eine nun um die gewünschte Phase verschobene symmetrische Welle mit der Frequenz des Set-Signals umgewandelt werden. Diese Welle bildet dann das oben erwähnte Steuersignal.

Bei einer Ausgangsfrequenz beispielsweise eines Quarz-Oszillators von 10 MHz und durch feste Teilung durch 200, kann beispielsweise eine Phasenverschiebung in 200 Schritten von jeweils 1,8 Grad vorgenommen werden. Die Phasenverschiebung kann einmal eingeschaltet werden und ist auch bei Widereinschalten eines Geräts automatisch reproduzierbar. Sie kann direkt durch einen Rechner angesteuert werden. Aus dem Referenzsignal der Referenzzelle wird eine frequenzbestimmende Vorspannung gewonnen und dem Oszillator zugeführt. Wenn aufgrund des Herauslaufens der Mikrowellenfrequenz aus der Absorptionsfrequenz und damit aus dem Nulldurchgang des Referenzzellensignals eine endliche Spannung im Referenzzweig entsteht, sorgt die Regelung 63 für eine entsprechende Korrekturspannung.

Das Meßsignal kann angezeigt oder zur Steuerung von Prozessen weiter verwendet werden.

Die eigentliche Intensitätsmessung wird auf dem Maximum der Absorptionslinie vorgenommen und hierzu zur Vermeidung des Einflusses von Leistungsschwankungen im Leistungssättigungsbereich gearbeitet. Dieses Verfahren garantiert schnelle Ansprechzeiten des Meßsystems, benötigt aber entsprechend leistungsstarke Mikrowellensender mit einer Leistung von 20 bis 60 mW.

Figur 7 zeigt gegenüber Figur 1 ein erstes Mehrkomponentensystem mit mehreren untereinander und mit der Meßzelle 11 in Reihe geschalteten Referenzzellen 4.1 bis 4.N. Die Referenzzellen 4.1 bis 4.N werden über Hohlleiterschalter 81.1 bis 81.N jeweils mit einem abgestimmten Sender 2.1 bis 2.N verbunden, die über einen Schalter 82 ansteuerbar sind, während die Stark-Spannungen über einen Schalter 83 an die entsprechende Referenzzelle 4.1 anlegbar ist.

Die Messung erfolgt derart, daß zunächst die entsprechend voreingestellte Stark-Spannung über den Schalter 83 an die Referenzzelle 4.1 angelegt und mit dem Schalter 82 der Sender 2.1 angesteuert und dieser über den Hohlleiterschalter 81.1 mit dem Hohlleiter-System verbunden wird, die Messung durchgeführt wird und die Messungen der in den weiteren Referenzzellen enthaltenen Gas-Komponenten sukzessive erfolgen.

Die bei der vorstehend beschriebenen Ausführungsform aufgrund der nach Umschalten jeweils erforderlichen Frequenzsynchronisation der Sender gegebene Verzögerungszeit, läßt sich bei einer Ausgestaltung nach der Figur 7 vermeiden. Hier sind die beiden Sender 2.1 und 2.2 einerseits mit in Reihe geschalteten Referenzzellen 4.1, 4.2 verbunden, die mit zueinander verschobenen Starkwechselspannungen beaufschlagt werden. Andererseits sind die Sender über Hohlleiterschalter 81.1 und 81.2 wechselweise mit der Meßzelle 11 verbindbar, die nicht durch Anlegen beider Sender überlastet werden soll. Die Sender 2.1 und 2.2 werden durch die Regler 63.1 und 63.2 in ihrer Frequenz geregelt. Hierbei arbeiten beide Sender permanent und werden auch permanent nachgestimmt, so daß die geeigneten Mikrowellenfrequenz unmittelbar bei Umschalten der Schalter 81.1 und 81.2 an der Meßzelle 11 zur Verfügung steht.

Die Referenzzelle muß nicht in jedem Fall die reine zu untersuchende Komponente selbst enthalten. Bei der Messung hochgiftiger oder explosiver Substanzen kann auch eine andere chemische Verbindung dafür eingesetzt werden. Die Auswahl dieser Referenzverbindung erfolgt danach, daß sie eine Absorptionslinie in unmittelbarer Nähe des gewählten Rotationsübergangs der Meßkomponente haben muß. Durch Anlegen von Gleichspannung (en) - und Überlagerung derselben mit der Starkwechselspannung in Referenz- und/oder Meßzelle lassen sich die S-förmige Kurve der Referenzzelle und die Absorptionslinie in der Weise zueinander verschieben, daß der Nulldurchgang wieder bei der Frequenz des Linienmaximums erfolgt.

Beispiel: Messung von Chlorcyan bei V = 35 825.95 MHz Die beiden nächstliegenden Absorptionslinien anderer Verbindungen sind:

zu niedrigen Frequenzen $CH_3SiHDF$ V = 35 825.5 MHz

zu niedrigen Frequenzen $CHD_2NC$ V = 35 827.44 MHz.

Ein gleichzeitiges Vorliegen der Meßkomponente ClCN und Methyldeuterofluorsilan bzw. Dideuteromethylisocyanid im Meßgas kann ausgeschlossen werden, insofern kann VClCN bei der Frequenz von 35 825.95 MHz selektiv gemessen werden. Auf der anderen Seite liegen die Absorptionslinien der partiell deuterierten Verbindungen so nahe, daß sich schon durch Anlegen von geringen Gleichspannungen ein Kurvenverlauf wie in Abbildung 5 ergibt.

**Patentansprüche**

1. Verfahren zur Analyse insbesondere gasförmiger Medien mittels Mikrowellenabsorption, wobei eine Mikrowelle mit mindestens einer Frequenz erzeugt wird, dadurch gekennzeichnet, daß zur Regelung der Mikrowellenfrequenz eine Stark-Spannung bei abgestimmter Mikrowellenfrequenz derart gewählt wird, daß der durch Paritätswechsel zwischen unverschobener Absorptionslinie und Starklinien bedingte Nulldurchgang eines unter Einfluß dieser Spannung erzeugten, über die Frequenz hin abgefragten Referenzsignals mit der gesuchten Absorptionsfrequenz des gasförmigen Mediums übereinstimmt und die erzeugte Mikrowellenfrequenz durch auftretende Abweichungen des Referenzsignals vom Nullwert geregelt wird.

2. Verfahren nach Anspruch 1, dadurch gekennzeichnet, daß bei Einsatz des Starkeffekts am Meßsignal die Starkspannungen für Referenz- und Meßsignal phasenverschoben moduliert werden.

3. Verfahren nach Anspruch 2, dadurch gekennzeichnet, daß die Modulation mit einer Phasenverschiebung von 90 Grad erfolgt.

4. Verfahren nach einem der Ansprüche 1 bis 3, dadurch gekennzeichnet, daß die Starkhochspannung durch eine die Starkkapazität unmittelbar zu einem Parallelschwingkreis ergänzende, die Hochspannungswicklung eines Transformators bildende Induktivität ergänzt wird.

5. Verfahren nach einem der Ansprüche 1 bis 4, dadurch gekennzeichnet, daß eine gemeinsame, wenn auch phasenversetzte Detektion und Vorverstärkung von Referenz- und Meßsignalen erfolgt.

6. Verfahren nach Anspruch 5, dadurch gekennzeichnet, daß die Vorverstärkung durch ein unterkritisch gedämpftes, passives LC-Hochpaßnetzwerk erfolgt, wobei der Bandpaßcharakter auf der Resonanzfrequenz ausgenutzt wird.

7. Verfahren nach einem der Ansprüche 1 bis 6, dadurch gekennzeichnet, daß durch eine Lock-in-Verstärkung eine phasen-und frequenzselektive Verstärkung erfolgt.

8. Verfahren nach einem der vorangehenden Ansprüche, wobei in einer Mikrowellen-Absorptionsreferenzzelle zur Erzeugung eines Unterdrucks Gas abgesaugt wird, dadurch gekennzeichnet, daß die Temperatur eines Permeationssystems für die Reingaskomponente so geregelt wird, daß der Druck in der Referenzzelle konstant bleibt.

9. Verfahren nach Anspruch 8, dadurch gekennzeichnet, daß das Gas aus der Zelle mit konstantem Durchfluß abgesaugt wird.

10. Vorrichtung zur Analyse gasförmiger Medien mittels der Absorption von Mikrowellen, insbesondere unter Einsatz des Starkeffekts, zur Durchführung eines Verfahrens nach einem der vorangehenden Ansprüche, mit mindestens einem Mikrowellensender (2), mindestens einer Meßzelle (11), mindestens einem Detektor (19), Verstärkungs- und Anzeigeeinrichtungen für das Meßsignal, einer Regeleinrichtung (63) für den Mikrowellensender sowie einen Starkgenerator, dadurch gekennzeichnet, daß zumindestens eine Referenzzelle (4) vorgesehen ist, die mit einem derart abgestimmten Stark-Spannungssignal beaufschlagt wird, daß die Frequenz des durch Polaritätsänderung zwischen unverschobener Absorptionslinie und Starklinien bedingten Nulldurchgangs (73) des Referenzzellensignals (74) mit der Frequenz maximaler Absorption der zu untersuchenden Komponente des gasförmigen Mediums in der Meßzelle übereinstimmt und daß die Regeleinrichtung (63) die Frequenz des Mikrowellensenders (2) mittels Abweichungen des Referenzsignals (74) vom Nulldurchgang (73) regelt.

11. Vorrichtung nach Anspruch 10, dadurch gekennzeichnet, daß mindestens eine Referenz- und Meßzelle (4, 11) hintereinander angeordnet sind, daß für beide Zellen (4, 11) ein gemeinsamer Detektor (19) vorgesehen ist und daß ein Phasenschieber zur Erzeugung einer Phasendifferenz der Stark-Spannung für Meßzelle (11) und Referenzzelle (4) vorgesehen ist.

12. Vorrichtung nach Anspruch 11, dadurch gekennzeichnet, daß ein gemeinsamer Vorverstärker (62) vorgesehen ist.

13. Vorrichtung nach Anspruch 12, dadurch gekennzeichnet, daß der Vorverstärker als unterkritisch gedämpftes, passives Hochpaßnetzwerk mit Bandpaßcharakteristik bei Resonanzfrequenz ausgebildet ist.

14. Vorrichtung nach einem der Ansprüche 10 bis 13, dadurch gekennzeichnet, daß ein phasenselektives Bandfilter vorgesehen ist.

15. Vorrichtung nach einem der Ansprüche 10 bis 14, dadurch gekennzeichnet, daß mehrere Mikrowellensender (2) unterschiedlicher Frequenz einer Meßzelle (11) zugeordnet sind.

16. Vorrichtung nach Anspruch 15, dadurch gekennzeichnet, daß mehrere Referenzzellen(4) einer Meßzelle (11) zugeordnet sind.

17. Vorrichtung nach Anspruch 16, dadurch gekennzeichnet, daß die Referenzzellen (11) in Reihe geschaltet sind.

18. Vorrichtung nach Anspruch 16, dadurch gekennzeichnet, daß die Referenzzellen (4) und die Meßzelle zueinander parallel geschaltet sind.

19. Vorrichtung nach einem der Ansprüche 10 bis 18, dadurch gekennzeichnet, daß der bzw. die Mikrowellensender (2) jeweils einen Gunn-Oszillator aufweisen.

20. Vorrichtung insbesondere nach einem der Ansprüche 10 bis 19, dadurch gekennzeichnet, daß die Referenzzelle (4) über deren Einlaß mit einem Permeationssystem (54) für eine Reingaskomponente verbunden ist, daß das Permeationssystem (54) eine Temperiereinrichtung (56) aufweist, und daß die Referenzzelle (4) einen Druckaufnehmer (57) aufweist, der über eine Druckregeleinrichtung (58) mit der Temperiereinrichtung (56) für das Permeationssystem (54) verbunden ist.

21. Vorrichtung nach Anspruch 20, dadurch gekennzeichnet, daß im Ausgang (7) der Referenzzelle (4) eine Kapillare (52) zur Durchflußstabilisierung nachgeordnet ist.

22. Vorrichtung nach Anspruch 20 oder 21, dadurch gekennzeichnet, daß dem Ausgang (7) und der Referenzzelle (4) Filter (53) nachgeordnet sind.

23. Vorrichtung nach einem der Ansprüche 20 bis 21, dadurch gekennzeichnet, daß Referenz- und Meßzellen (4, 11) eine gemeinsame Thermostatisierung (41) aufweisen.

**Claims**

1. Method especially for the analysis of gaseous media by means of microwave absorption, one microwave being produced with at least one frequency, characterised in that, to control the microwave frequency, a power voltage at an adapted microwave frequency is so selected that the zero passage of a reference signal, which is produced by the influence of this voltage and is read-out over the frequency, is identical to the desired absorption frequency of the gaseous medium, such passage being caused by a change in polarity between the non-displaced absorption line and power lines, and the microwave frequency which is produced is controlled as a result of the reference signal deviating from zero.

2. Method according to claim 1, characterised in that, when the power effect is used on the measuring signal, the power voltages for the reference and measuring signals are modulated in a phase-displaced manner.

3. Method according to claim 2, characterised in that the modulation is effected with a phase displacement of 90 degrees.

4. Method according to one of claims 1 to 3, characterised in that the high-power voltage is supplemented by an inductance, which directly supplements the power capacitance to produce a parallel-resonant circuit and forms the high-voltage winding of a transformer.

5. Method according to one of claims 1 to 4, characterised in that reference and measuring signals are jointly detected and preamplified, even if in a phase-offset manner.

6. Method according to claim 5, characterised in that the preamplification is effected by a sub-critically damped, passive LC high-pass network, the band-pass character being utilised on the resonance frequency.

7. Method according to one of claims 1 to 6, characterised in that a phase- and frequency-selective amplification is effected by a lock-in amplification.

8. Method according to one of the preceding claims, wherein gas is evacuated from the microwave absorption reference cell in order to produce a vacuum, characterised in that the temperature of a permeation system for the filtered gas component is so controlled that the pressure in the reference cell remains constant.

9. Method according to claim 8, characterised in that the gas is evacuated from the cell with a constant flow.

10. Device for the analysis of gaseous media by means of microwave absorption, more especially using the power effect, to carry out a method according to one of the preceding claims, comprising at least one microwave transmitter (2), at least one measuring cell (11), at least one detector (19), amplifying and indicating means for the measuring signal, a control means (63) for the microwave transmitter, and a power generator, characterised in that at least one reference cell (4) is provided, which is acted upon by a power voltage signal which is thus adapted, in that the frequency of the zero passage (73) of the reference cell signal (74) is identical to the frequency of maximum absorption of the component which is to be investigated of the gaseous medium in the measuring cell, such zero passage being caused by a change in polarity between the non-displaced absorption line and power lines, and in that the control means (63) controls the frequency of the microwave transmitter (2) by means of deviations of the reference signal (74) from the zero passage (73).

11. Device according to claim 10, characterised in that at least one reference cell (4) and one measuring cell (11) are disposed one behind the other, in that a common detector (19) is provided for both cells (4, 11), and in that a phase shifter is provided for producing a phase difference in the power voltage for the measuring cell (11) and reference cell (4).

12. Device according to claim 11, characterised in that a common preamplifier (62) is provided.

13. Device according to claim 12, characterised in that the preamplifier is a sub-critically damped, passive high-pass network having band-pass characteristics at resonance frequency.

14. Device according to one of claims 10 to 13, characterised in that a phase-selective band filter is provided.

15. Device according to one of claims 10 to 14, characterised in that a plurality of microwave transmitters (2) of variable frequencies are associated with the measuring cell (11).

16. Device according to claim 15, characterised in that a plurality of reference cells (4) are associated with the measuring cell (11).

17. Device according to claim 16, characterised in that the reference cells (11) are connected in series.

18. Device according to claim 16, characterised in that the reference cells (4) and the measuring cell are connected in parallel with one another.

19. Device according to one of claims 10 to 18, characterised in that the microwave transmitter or transmitters (2) each have a Gunn oscillator.

20. Device, more especially according to one of claims 10 to 19, characterised in that the reference cell (4) is connected by means of its inlet to a permeation system (54) for a filtered gas component, in that the permeation system (54) has a temperature control means (56), and in that the reference cell (4) has a pressure sensor (57), which is connected by means of a pressure control (58) to the temperature control means (56) for the permeation system (54).

21. Device according to claim 20, characterised in that a capillary tube (52) is additionally disposed in the outlet (7) of the reference cell (4) in order to stabilise flow.

22. Device according to claim 20 or 21, characterised in that filters (53) are disposed downstream of the outlet (7) and the reference cell (4).

23. Device according to one of claims 20 to 21, characterised in that the reference and measuring cells (4, 11) have a common thermostat-controlling means (41).

**Revendications**

1. Procédé pour analyser des milieux en particulier gazeux par absorption de micro-ondes, en créant une micro-onde avec au moins une fréquence, procédé caractérisé en ce que pour le réglage de la fréquence des micro-ondes on choisit une tension de Stark pour une fréquence de micro-ondes ajustée de façon que le passage par zéro dû au changement de parité entre la ligne d'absorption non décalée et les lignes de Stark, d'un signal de référence produit sous l'influence de cette tension, appelé par la fréquence, coïncide avec la fréquence d'absorption cherchée du milieu gazeux et la fréquence des microondes produite soit réglée par des déviations du signal de référence à partir de la valeur zéro.

2. Procédé selon la revendication 1, caractérisé en ce que lors de l'utilisation de l'effet Stark sur le signal de mesure les tensions de Stark pour signal de référence et signal de mesure sont modulées décalées.

3. Procédé selon la revendication 2, caractérisé en ce que la modulation se fait avec un décalage de 90 degrés.

4. Procédé selon l'une des revendications 1 à 3, caractérisé en ce que la haute tension de Stark est complétée par une inductance, complétant la capacité Stark directement en un circuit oscillant parallèle et formant l'enroulement haute tension d'un transformateur.

5. Procédé selon l'une des revendications 1 à 4, caractérisé en ce qu'il se produit une détection et une préamplification commune, bien qu'en phases décalées, des signaux de référence et de mesure.

6. Procédé selon la revendication 5, caractérisé en ce que la préamplification se fait par un réseau passe haut LC, le caractère passe bande étant utilisé pour la fréquence de résonance.

7. Procédé selon l'une des revendications 1 à 6, caractérisé en ce que, par suite d'une préamplification de blocage, a lieu une préamplification sélective de phases et de fréquence.

8. Procédé selon l'une des revendications précédentes, dans lequel du gaz est aspiré dans une cellule de référence d'absorption de micro-ondes en créant une dépression, caractérisé en ce que la température d'un système de perméation pour le composant de gaz pur est réglée, de façon à laisser constante la pression dans la cellule de référence.

9. Procédé selon la revendication 8, caractérisé en ce que le gaz est aspiré hors de la cellule à débit constant.

10. Dispositif pour l'analyse de milieux gazeux par absorption de micro-ondes, en particulier en utilisant l'effet Stark, par réalisation d'un procédé, selon une des revendications précédentes, comportant au moins un émetteur de micro-ondes (2), au moins une cellule de mesure (11), au moins un détecteur (19), des dispositifs d'amplification et des dispositifs indicateurs pour le signal de mesure, un dispositif de réglage (63) pour l'émetteur de micro-ondes ainsi qu'un générateur de Stark, dispositif caractérisé en ce qu'il a été prévu au moins une cellule de référence (4), qui est soumise à un signal de tension de Stark adapté de façon, que la fréquence du passage par zéro (73) du signal de la cellule de référence (74), passage dû au changement, de polarité entre la ligne d'absorption non décalée et les lignes de Stark, coïncide avec la fréquence d'absorption maximale du composant à analyser du milieu gazeux dans la cellule de mesure et en ce que le dispositif de réglage (63) règle la fréquence de l'émetteur de micro-ondes (2) au moyen de la déviation du signal de référence (74) du passage par zéro (73).

11. Dispositif selon la revendication 10, caractérisé en ce qu'au moins une cellule de référence et une cellule de mesure (4, 11) sont disposées l'une derrière l'autre, en ce qu'un détecteur commun (19) est prévu pour les deux cellules (4, 11) et en ce qu'un déphaseur est prévu pour réaliser une différence de phase de la tension de Stark pour la cellule de mesure (11) et la cellule de référence (4).

12. Dispositif selon la revendication 11, caractérisé en ce qu'un préamplificateur commun (62) est prévu.

13. Dispositif selon la revendication 12, caractérisé en ce que le préamplificateur est réalisé en réseau passe haut passif, amorti en sous critique avec caractéristique passe bande pour fréquence de résonance.

14. Dispositif selon l'une des revendications 10 à 13, caractérisé en ce qu'un filtre passe bande sélectif de phases est prévu.

15. Dispositif selon l'une des revendications 10 à 14, caractérisé en ce que plusieurs émetteurs de micro-ondes (2) de fréquence différente sont associés à une cellule de mesure (11).

16. Dispositif selon la revendication 15, caractérisé en ce que plusieurs cellules de référence (4) sont associées à une cellule de mesure (11).

17. Dispositif selon la revendication 16, caractérisé en ce que les cellules de référence sont branchées en série.

18. Dispositif selon la revendication 16, caractérisé en ce que les cellules de référence (4) et la cellule de mesure sont branchées ensemble en parallèle.

19. Dispositif selon l'une des revendications 10 à 18, caractérisé en ce que le ou les émetteur(s) de micro-ondes (2) comportent respectivement un oscillateur de Gunn.

20. Dispositif en particulier selon l'une des revendications 10 à 19, caractérisé en ce que la cellule de référence (4) est reliée par son entrée à un système de perméation (54) pour un composant de gaz pur, en ce que le système de perméation comprend un dispositif d'équilibrage de température (56), et en ce que la cellule de référence (4) possède un capteur de pression (57) qui est relié par un dispositif de réglage de pression (58) au dispositif d'équilibrage de température (56) du système de perméation (54).

21. Dispositif selon la revendication 20, caractérisé en ce qu'à la sortie (7) de la cellule de référence (4) est placé un tube capillaire (52) pour stabiliser le débit.

22. Dispositif selon la revendication 20 ou 21, caractérisé en ce qu'à la sortie (7) de la cellule de référence (4) est placé un filtre (53).

23. Dispositif selon l'une des revendications 20 à 21, caractérisé en ce que les cellules de référence et les cellules de mesure (4, 11) comportent une stabilisation thermostatique commune.

## Fig. 1

## Fig. 2

Fig. 3

Fig. 4

Fig. 5

# Fig. 6

Fig. 7